# EUROPEAN PATENT APPLICATION

(11) **EP 1 666 527 A1**
(43) Date of publication of application: **07.06.2006**
(21) Application number: 04771382.1
(22) Date of filing: 02.08.2004
(51) Int. Cl.: C08L 23/04, H01B 7/282

(54) **ADDITIVE FOR COMMUNICATION CABLE FILLER AND COMMUNICATION CABLE FILLER**

(30) Priority: 27.08.2003 JP 2003302255
(71) Applicant: Mitsui Chemicals, Inc., Tokyo 105-7117 (JP)
(72) Inventor: UOSAKI, Hirotaka, c/o Mitsui Chemicals, Inc., Sodegaura-shi, Chiba 299-0265 (JP); TOYODA, Hideo, c/o Mitsui Chemicals, Inc., Tokyo 105-7117 (JP)
(74) Representative: HOFFMANN EITLE
(86) International application number: PCT/JP2004/011388
(87) International publication number: WO 2005/021640

(57) **Abstract**

An additive for communication cable filler, comprises as its main component a polyolefin wax defined by: (i) being an ethylene homopolymer or an ethylene/C₃-C₁₀ α-olefin copolymer; (ii) having a number average molecular weight (Mn), meaured by gel permeation chromatography (GPC), of 400 to 5000; and (iii) upon the addition of the additive for communication cable filler to a jellylike filling material so as to form a communication cable filler, exhibiting a storage modulus (G') of communication cable filler at 80°C ranging from 1 × 10³ Pa to 1 × 10⁴ Pa and a loss modulus (G'') at 120°C or below of 1 × 10¹ Pa or below. Further, a communication cable filler comprises at least the above additive for communication cable filler and jellylike filling material. The provided additive for communication cable filler and communication cable filler simultaneously realize satisfactory communication cable filler filling workability and strength.

## Description

### TECHNICAL FIELD

The present invention relates to an additive for communication cable filler and a communication cable filler.

### BACKGROUND ART

If armors or joints of communication cables, particularly those of communication cables for underground buried wiring are damaged or deteriorated, infiltration of water into the cables brings to impairment of electric transmission characteristics of the cables. Moreover, if a pinhole or the like is present in the insulators of the cables, insulation is reduced by infiltration of water, which may eventually bring about a short circuit and sometimes bring about an accident of wire breaking.

To prevent circuit troubles due to infiltration of water into cables, development of waterproof communication cables has been made and communication cables filled with jelly-like filling materials came to be mainly employed.

As the jelly-like filling materials, blends of petroleum jelly such as petrolatum, polybutene, atactic polypropylene (PP), mineral oil, various waxes and the like are generally employed, and they are publicly known. Especially for thick cables, there is no filling materials satisfying all the requirements such as waterproof properties, electrical properties, dropping properties, melting point, consistency and workability, and filling materials obtained by adding blends to petrolatum are mainly employed. From the viewpoints of cost and supply stability, however, formulations mainly using polybutene are advantageous. The polybutene referred to herein means polybutene in a narrow sense, namely, a liquid polymer in which a mixture of three isomers of n-1-butene, n-2-butene and isobutylene is polymerized in a range of a 5mer to a 50mer.

For the polybutene-based waterproof cable jellies, a great number of formulations have been proposed, and it is also known to use polyethylene (PE) wax, paraffin wax and microcrystalline wax as additives. The reason for using additives in combination with polybutene is that the volume shrinkage after pouring of a jelly into the cable is minimized to impart flexibility to the cable.

In the filling work of a cable with a cable jelly that is melted at a high temperature, the temperature at which the molten cable jelly is cooled and hardened in the cable is desired to be as low as possible. The reason is that it is required to fill the cable with the cable jelly while keeping low viscosity more rapidly and in every nook and corner. On this account, the crystallizing temperature (Tc) of the PE wax that determines the hardening temperature of the cable jelly is desired to be as low as possible.

On the other hand, the PE wax is required to harden the polybutene in the cable jelly to keep a given strength. When oil is added, the PE wax is also required to have oil retention properties to prevent oozing of the oil by hardening the oil in the cable jelly. When Tc of the wax is decreased for the purpose of decreasing the hardening temperature of the cable jelly, there arises a problem that the oil retention properties and the cable jelly strength are also reduced at the same time. The reason is that decrease of crystallinity or crystallizability of the wax to decrease the Tc results in lowering of cable jelly strength and oil retention properties.

### DISCLOSURE OF THE INVENTION

It is an object of the present invention to provide an additive for communication cable filler, which can satisfy both the filling workability and strength of a cable jelly, and a communication cable filler.

The present inventors have studied intensively in order to solve the above problem and have developed an additive for communication cable filler and a communication cable filler having both excellent filling workability and excellent strength, and completed the present invention.

Accordingly, the present invention provides an additive for communication cable filler, comprising as its main component a polyolefin wax specified by:
(i) being an ethylene homopolymer or an ethylene/α-olefin having 3 to 10 carbon atoms copolymer;
(ii) having a number-average molecular weight (Mn), measured by gel permeation chromatography (GPC), of 400 to 5000; and
(iii) upon the addition of the additive for communication cable filler to a jellylike filling material so as to form a communication cable filler, exhibiting a storage modulus (G') of communication cable filler at 80°C ranging from 1 × 10³ Pa to 1 × 10⁴ Pa and a loss modulus (G") at 120°C of 1 × 10¹ Pa or below.

Further, there is provided a communication cable filler comprising at least the above additive for communication cable filler and jellylike filling material.

According to the present invention, the provided additive for communication cable filler and communication cable filler simultaneously realize satisfactory communication cable filler filling workability and strength.

### BEST MODE FOR CARRYING OUT THE INVENTION

Hereinafter, an additive for communication cable filler and a communication cable filler according to the present invention will be described in detail.

The additive for communication cable filler according to the intention contains a specific polyolefin wax as its main component.

The polyolefin wax for use in the present invention is an ethylene homopolymer or a copolymer of ethylene and an α-olefin, and among them, an ethylene homopolymer is preferred.

Although the α-olefin is not specifically restricted, an α-olefin having 3 to 20 carbon atoms can be used, preferably an α-olefin having 3 to 10 carbon atoms, more preferably propylene having 3 carbon atoms, 1-butene having 4 carbon atoms, 1-pentene having 5 carbon atoms, 1-hexene or 4-methyl-1-pentene having 6 carbon atoms, or 1-octene having 8 carbon atoms. Among them, particularly preferable is propylene, 1-butene, 1-hexene, or 4-methyl-1-pentene.

Among the copolymers of ethylene and an α-olefin (ethylene/α-olefin copolymer), an ethylene-based random copolymer is preferable and a copolymer having an ethylene component content of 90 to 100 mol% is more preferable. When the α-olefin component content becomes greater than 10 mol%, the proportion of crystal component of the ethylene/α-olefin copolymer, namely the crystallinity becomes extremely low, so that the strength of the resultant communication cable filler tends to be reduced.

Further, the polyolefin wax for use in the present invention has a number-average molecular weight (Mn) of 400 to 5,000, measured by gel permeation chromatography (GPC), preferably of 400 to 3,000. The polyolefin wax having Mn less than 400 provides a communication cable filler with a lower melting point and too high consistency. On the other hand, the polyolefin wax having Mn more than 5,000 is not suitable for use in a communication cable filler, because the melt viscosity of the communication cable filler becomes larger and its workability tends to be poor.

Storage modulus (G') and loss modulus (G") are one of the properties related to the filling workability and strength of communication cable fillers. Lower storage modulus (G') results in a communication cable filler with lower strength, and higher loss modulus (G") results in poor workability.

The communication cable filler for use in the present invention has a storage modulus (G') of 1 × 10³ Pa to 1 × 10⁴ Pa at 80 °C. A communication cable filler with a storage modulus (G') of less than 1 × 10³ Pa cannot provide a sufficient strength immediately after filling and tends to lack strength after it is filled in a communication cable. A communication cable filler with a storage modulus (G') of more than 1 × 10⁴ Pa brings about poor workability.

Also, the communication cable filler for use in the present invention has a loss modulus (G") of 1 × 10¹ Pa or less at 120°C. A communication cable filler with a loss modulus G" of more than 1 × 10¹ Pa tends to give poor workability.

The polyethylene wax for use in the present invention can be prepared, for example, by methods of olefin polymerization using a Ziegler-based catalyst or a metallocene-based catalyst containing a transition metal compound as a catalyst component. Among these methods, olefin polymerization using a metallocene-based catalyst is preferable.

Preparation of a polyolefin wax for use in the present invention will be described in the following examples where a metallocene-based catalyst is used, but it should be construed that the invention is in no way limited to those

### examples.

### (Metallocene compounds)

A metallocene compound forming a metallocene-based catalyst is a metallocene compound of a transition metal selected from Group IV elements in the periodic table, and specific examples include a compound represented by the following general formula (1),

M¹Lx (1)

Here, M¹ is a transition metal selected from Group IV elements in the periodic table, x is the valence of the transition metal M¹ and L is a ligand.

Examples of the transition metal represented by M¹ include zirconium, titanium, hafnium and the like. L is a ligand coordinating to the transition metal M¹, of which at least one ligand L is a ligand having a cyclopentadienyl skeleton, and the ligand having a cyclopentadienyl skeleton may have a substituent.

Examples of the ligand L having a cyclopentadienyl skeleton include alkyl- or cycloalkyl-substituted cyclopentadienyl group such as cyclopentadienyl group, methylcyclopentadienyl group, ethylcyclopentadienyl group, nor i-propylcyclopentadienyl, n-, i-, sec- or t-butylcyclopentadienyl group, dimethylcyclopentadienyl group, methylpropylcyclopentadienyl group, methylbutylcyclopentadienyl group, methylbenzylcyclopentadienyl group and the like; and indenyl group, 4,5,6,7-tetrahydroindenyl group, fluorenyl group and the like. Hydrogen atoms of the ligand having a cyclopentadienyl skeleton may be substituted with a halogen atom or a trialkylsilyl group.

When the metallocene compound described above has two or more ligands having a cyclopentadienyl skeleton as the ligand L, two of the ligands L having the cyclopentadienyl skeleton may be bonded together via an alkylene group such as ethylene, propylene and the like; a substituted alkylene group such as isopropylidene, diphenylmethylene and the like; a silylene group, a substituted silylene group such as dimethylsilylene group, diphenylsilylene group, methylphenylsilylene group and the like.

Examples of a ligand L other than a ligand having a cyclopentadienyl skeleton (a ligand not having a cyclopentadienyl skeleton) include a hydrocarbon group having 1 to 12 carbon atoms, an alkoxy group, an aryloxy group, a sulfonic aid-containing group (-SO₃R¹), a halogen atom or a hydrogen atom (wherein, R¹ is an alkyl group, an alkyl group substituted with a halogen atom, an aryl group, an aryl group substituted with a halogen atom or an aryl group substituted with an alkyl group).

### (Example-1 of the metallocene compound)

For example, when the valence of a transition metal is 4, a metallocene compound represented by the general formula (1) is more specifically represented by the following general formula (2),

R^{2k}R³₁R⁴ₘR⁵ₙM¹ (2)

Here, M¹ is a transition metal selected from Group IV elements in the periodic table, R² is a group (a ligand) having a cyclopentadienyl skeleton, R³, R⁴ and R⁵ represent each independently a group (a ligand) having or not having a cyclopentadienyl skeleton. k is an integer of 1 or larger, and k + 1 + m + n = 4.

Examples of the metallocene compound in which M¹ is zirconium and having at least two ligands having each a cyclopentadienyl skeleton include:
bis(cyclopentadienyl)zirconium monochloridemonohydride, bis(cyclopentadienyl)zirconiumdichloride, bis (1-methyl-3-butylcyclopentadienyl)zirconium bis(trifluoromethanesulfonate), bis(1,3-dimethylcyclopentadienyl)zirconiumdichloride, bis(n-butylcyclopentadienyl) zirconiumdichloride and the like.

Among the compounds described above, a compound in which a 1,3-position substituted cyclopentadienyl group is replaced by a 1,2-position substituted cyclopentadienyl group may be used.

Moreover, as other examples of a metallocene compound, there may be used a bridge type metallocene compound of the above formula (2), wherein at least two of R², R³, R⁴ and R⁵, for example, R² and R³ are groups (ligands) each having a cyclopentadienyl skeleton and at least two of the groups are bonded via an alkylene group, substituted alkylene group, silylene group, substituted silylene group and the like. In this case, R⁴ and R⁵ are each independently similar to ligand L other than the ligand having a cyclopentadienyl skeleton described above.

Examples of the bridge type metallocene compound include ethylenebis(indenyl)dimethyl zirconium, ethylenebis(indenyl)zirconiumdichloride, isopropylidene(cyclopentadienyl-fluorenyl)zirconiumdichloride, diphenylsilylenebis(indenyl)zirconiumdichloride, methylphenylsilylenebis(indenyl)zirconium dichloride and the like.

### (Example-2 of the metallocene compound)

In addition, a metallocene compound is exemplified by a compound represented the following general formula (3), which is described in Japanese published unexamined application No. 4-268307,

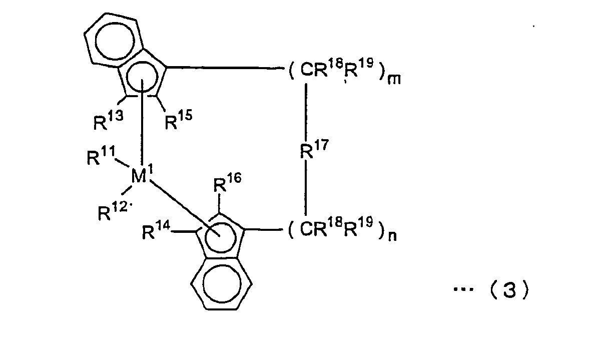

Here, M¹ is a transition metal of Group IV elements in the periodic table, specifically titanium, zirconium and hafnium.

R¹¹ and R¹² may be the same or different from each other, and are a hydrogen atom; an alkyl group having 1 to 10 carbon atoms; an alkoxy group having 1 to 10 carbon atoms; an aryl group having 6 to 10 carbon atoms; an aryloxy group having 6 to 10 carbon atoms; an alkenyl group having 2 to 10 carbon atoms; an arylalkyl group having 7 to 40 carbon atoms; an alkylaryl group having 7 to 40 carbon atoms; an arylalkenyl group having 8 to 40 carbon atoms; or a halogen atom, and R¹¹ and R¹² preferably are a chlorine atom.

R¹³ and R¹⁴ may be the same or different from each other, and are a hydrogen atom; a halogen atom; an optionally halogenated alkyl group having 1 to 10 carbon atoms; an aryl group having 6 to 10 carbon atoms; -N (R²⁰)₂, -SR²⁰, -OSi (R²⁰)₃, -Si(R ²⁰)₃ or -P(R²⁰)₂, wherein R²⁰ is a halogen atom, preferably a chlorine atom; an alkyl group having 1 to 10 carbon atoms, preferably 1 to 3 carbon atoms; or an aryl group having 6 to 10 carbon atoms, preferably 6 to 8 carbon atoms.

R¹⁵ and R¹⁶ are the same as R¹³ and R¹⁴ except that a hydrogen atom is not contained, and may be the same or different from each other, preferably are same. R¹⁵ and R¹⁶ preferably are an optionally halogenated alkyl group having 1 to 4 carbon atoms, and specifically include methyl, ethyl, propyl, isopropyl, butyl, isobutyl, trifluoromethyl and the like, and especially preferable is methyl.

In the general formula (3) described above, R¹⁷ is selected from the following group; 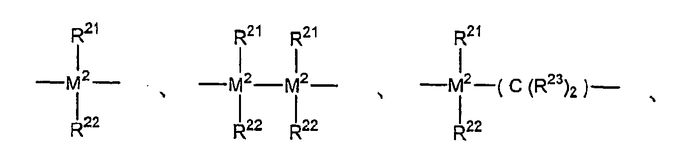 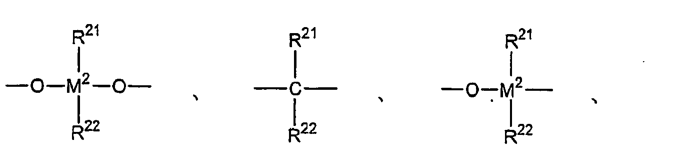 =BR²¹, =A1R²¹, -Ge-, -Sn-, -O-, -S-, =SO, =SO₂, =NR²¹, =CO, =PR²¹, =P (O) R²¹ and the like. M² is silicon, germanium or tin, preferably silicon or germanium.

Here, R²¹, R²² and R²³ may be the same or different from one another, and are a hydrogen atom; a halogen atom; an alkyl group having 1 to 10 carbon atoms; a fluoroalkyl group having 1 to 10 carbon atoms; an aryl group having 6 to 10 carbon atoms; a fluoroaryl group having 6 to 10 carbon atoms; an alkoxy group having 1 to 10 carbon atoms; an alkenyl group having 2 to 10 carbon atoms; an arylalkyl group having 7 to 40 carbon atoms; an arylalkenyl group having 8 to 40 carbon atoms; or an alkylaryl group having 7 to 40 carbon atoms. "R²¹ and R²²" or "R²¹ and R²³" may form a ring together with an atom to which they are each bonded.

Further, R¹⁷ preferably is =CR²¹R²², =SiR²¹R²², =GeR²¹R²², -O-, -S-, =SO, =PR²¹ or =P(O)R²¹.

R¹⁸ and R¹⁹ may be the same or different from each other and are the same groups as R²¹.

m and n may be the same or different from each other and are 0, 1 or 2, preferably 0 or 1, and m + n is 0, 1 or 2, preferably 0 or 1.

Examples of the metallocene compound represented by the general formula (3) described above include rac-ethylene(2-methyl-1-indenyl)²-zirconium-dichloride, rac-dimethylsilylene(2-methyl-1-indenyl)²-zirconium-dichloride and the like. These metallocene compounds can be produced by a method described in Japanese published unexamined application No.4-268307.

### (Example-3 of the metallocene compound)

Furthermore, a compound represented by the following general formula (4) may be used as the metallocene compound

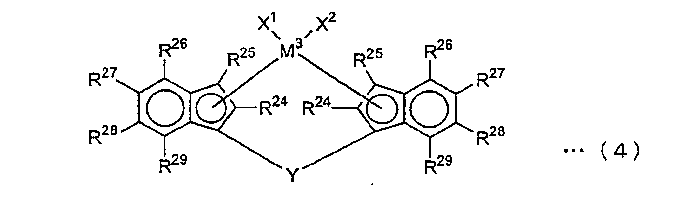

In the formula, M³ represents a transition metal of Group IV elements in the periodic table, specifically titanium, zirconium, hafnium and the like.

R²⁴ and R²⁵ may be the same or different from each other and represent a hydrogen atom, a halogen atom, a hydrocarbon group having 1 to 20 carbon atoms, a halogenated hydrocarbon group having 1 to 20 carbon atoms, a silicon-containing group, an oxygen-containing group, a sulfur-containing group, a nitrogen-containing group or a phosphorus-containing group.

R²⁴ preferably is a hydrocarbon group, and especially preferable is an alkyl group having 1 to 3 hydrocarbons such as methyl, ethyl or propyl.

R²⁵ preferably is a hydrogen atom or a hydrocarbon group, and especially preferable is a hydrogen atom and an alkyl group having 1 to 3 carbon atoms such as methyl, ethyl or propyl.

R²⁶, R²⁷, R²⁸ and R²⁹ may be the same or different from each other and represent a hydrogen atom, a halogen atom, a hydrocarbon group having 1 to 20 carbon atoms or a halogenated hydrocarbon group having 1 to 20 carbon atoms. Among these, a hydrogen atom, a hydrocarbon group or a halogenated hydrocarbon group is preferable. At least one pair of R²⁶ and R²⁷, R²⁷ and R²⁸, and R²⁸ and R²⁹ may form a monocyclic aromatic ring together with a carbon atom to which they are bonded. Also, when there are two or more hydrocarbon groups or halogenated hydrocarbon groups other than groups forming an aromatic ring, they are optionally bonded together to become cyclic. In addition, when R²⁹ is a substituent other than an aromatic group, it is preferably a hydrogen atom.

X¹ and X² may be the same or different from each other, and represent a hydrogen atom, a halogen atom, a hydrocarbon group having 1 to 20 carbon atoms, a halogenated hydrocarbon group having 1 to 20 carbon atoms, an oxygen-containing group or a sulfur-containing group.

Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, -SO₂-, -NR³⁰-, -P(R³⁰) -, -P (O) (R³⁰) -, -BR³⁰- or -AlR³⁰- (provided that R³⁰ is a hydrogen atom, a halogen atom, a hydrocarbon group having 1 to 20 carbon atoms or a halogenated hydrocarbon group having 1 to 20 carbon atoms).

In the formula (4), examples of a ligand which coordinates to M³, wherein at least one pair of R²⁶ and R²⁷, R²⁷ and R²⁸, and R²⁸ and R²⁹ forms a monocyclic aromatic ring by bonding each member of the pair together, and include a ligand represented by the following formulas, 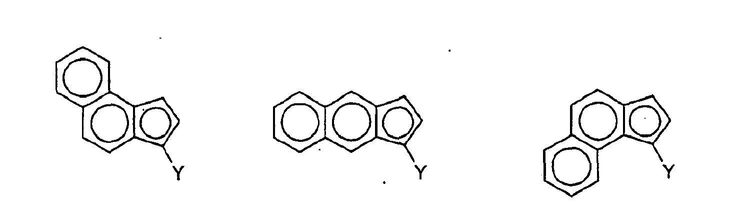 (wherein Y is the same ligand represented by the formula shown above.)

### (Example-4 of the metallocene compound)

Moreover, a metallocene compound represented by the following general formula (5) may be used as the metallocene compound.

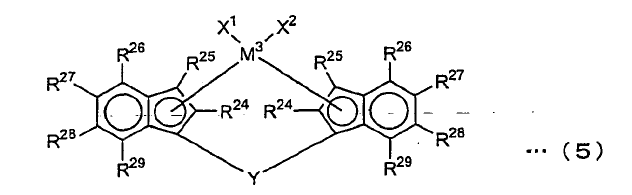

In the formula, M³, R²⁴, R²⁵, R²⁶, R²⁷, R²⁸ and R²⁹ are the same as those of the general formula (4) described above.

Among R²⁶, R²⁷, R²⁸ and R²⁹, preferably two groups containing R²⁶ are an alkyl group, and preferably R²⁶ and R²⁸, or R²⁸ and R²⁹ are an alkyl group. This alkyl group preferably is a secondary or tertiary alkyl group. Also, this alkyl group is optionally substituted with a halogen atom or a silicon-containing group, and examples of the halogen atom and the silicon-containing group include a substituent exemplified by R²⁴ and R²⁵.

Among R²⁶, R²⁷, R²⁸ and R²⁹, a group other than the alkyl group preferably is a hydrogen atom.

Moreover, two kinds of groups selected from R²⁶, R²⁷, R²⁸ and R²⁹ may be bonded together to form a monocyclic ring or a polycyclic ring other than an aromatic ring. Examples of the halogen atom include the same as that of R²⁴ and R²⁵.

Examples of X¹, X² and Y include the same as those described above.

Specific examples of the metallocene compound represented by the above general formula (5) include rac-dimethylsilylene-bis (4,7-dimethyl-1-indenyl) zirconiumdichloride, rac-dimethylsilylene-bis(2,4,7-trimethyl-1-indenyl) zirconiumdichloride, rac-dimethylsilylene-bis (2, 4, 6-trimethyl-1-indenyl)zirconiumdichloride and the like.

In these compounds, a transition metal compound in which zirconium metal is replaced by titanium metal or hafnium metal may be used. While the transition metal compound is typically used as a racemic body, an R-type or S-type compound may be utilized.

### (Example-5 of the metallocene compound)

A metallocene compound represented by the following general formula (6) may also be used as the metallocene compound.

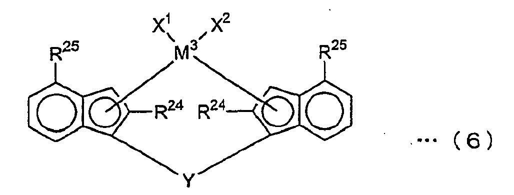

In the formula, M³, R²⁴, X¹, X² and Y are the same as those in the above general formula (4).

R²⁴ preferably is a hydrocarbon group, and especially preferable is an alkyl group having 1 to 4 carbon atoms of methyl, ethyl, propyl or butyl.

R²⁵ represents an aryl group having 6 to 16 carbon atoms. R²⁵ preferably is phenyl or naphthyl. The aryl group is optionally substituted with a halogen atom, a hydrocarbon group having 1 to 20 carbon atoms or a halogenated hydrocarbon group having 1 to 20 carbon atoms.

X¹ and X² preferably are a halogen atom or a hydrocarbon group having 1 to 20 carbon atoms.

Specific examples of the metallocene compound represented by the above general formula (6) include rac-dimethylsilylene-bis (4-phenyl-1-indenyl) zirconiumdichloride, rac-dimethylsilylene-bis (2-methyl-4-phenyl-1-indenyl)zirconiumdichloride, rac-dimethylsilylene-bis(2-methyl-4-(α-naphthyl)-1-indenyl) zirconiumdichloride, rac-dimethylsilylene-bis(2-methyl-4-(β-naphthyl)-1-indenyl)zirconiumdichloride, rac-dimethylsilylene-bis(2-methyl-4-(1-anthryl)-1-indenyl)zirconiumdichloride and the like. Also, in these compounds, a transition metal compound in which zirconium metal is replaced by titanium metal or hafnium metal may be used.

### (Example-6 of the metallocene compound)

Furthermore, a metallocene compound represented by the following general formula (7) may also be used as the metallocene compound.

LaM⁴X³₂ (7)

Here, M⁴ is a metal of Group IV elements in the periodic table or a metal of lanthanide series. La is a derivative of a delocalized π-bonded group, which is a group giving the constrain geometric structure to a metal M⁴ active site. X³ may be the same or different from each other, and is a hydrogen atom, a halogen atom, a hydrocarbon group having 20 carbon atoms or less, a silyl group having 20 carbon atoms or less and containing silicon, or a germyl group having 20 carbon atoms or less and containing germanium.

Among these compounds, a compound represented by the following formula (8) is preferable.

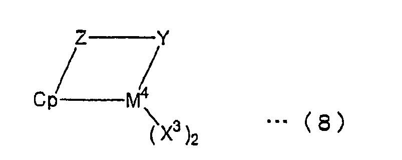

M⁴ is titanium, zirconium or hafnium.

X³ is the same as that explained by the above general formula (7).

Cp is a substituted cyclopentadienyl group which is π-bonded to M⁴ and has a substituent Z.

Z is oxygen, sulfur, boron or an element of Group IV in the periodic table (for example, silicon, germanium or tin).

Y is a ligand containing nitrogen, phosphorus, oxygen or sulfur, and may form a condensed ring with Z and Y.

Specific examples of such metallocene compounds represented by the general formula (8) are the following.

That is, they include (dimethyl(t-butyramide) (tetramethyl-η⁵-cyclopentadienyl)silane)titanium dichloride, ((t-butyramide) (tetramethyl-η⁵-cyclopentadienyl)-1,2-ethanediyl)titanium dichloride and the like. Moreover, in this metallocene compound, a compound in which titanium is replaced by zirconium or hafnium may be exemplified.

### (Example-7 of the metallocene compound)

Furthermore, a metallocene compound represented by the following general formula (9) may also be used as the metallocene compound.

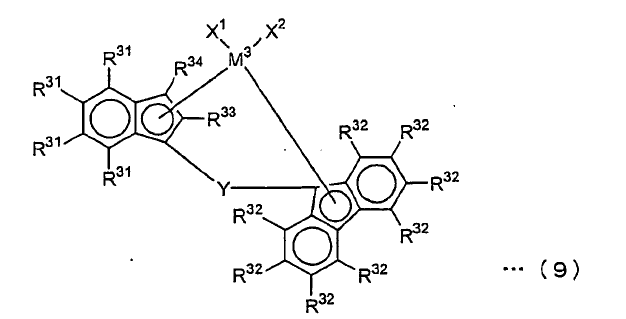

M³ is a transition metal of Group IV elements in the periodic table, and specifically is titanium, zirconium or hafnium, preferably is zirconium.

R³¹ may be the same or different from each other, and at least one of them is an aryl group having 11 to 20 carbon atoms, an arylalkyl-group having 12 to 40 carbon atoms, an arylalkenyl group having 13 to 40 carbon atoms, an alkylaryl group having 12 to 40 carbon atoms or a silicon-containing group, or at least two adjacent groups of the groups represented R³¹ form a single or a plurality of aromatic rings or aliphatic rings together with a carbon atom to which they are bonded.

In this case, a ring formed by R³¹ has a total of 4 to 20 carbon atoms, including the carbon atoms to which R³¹ is bonded.

R³¹, except for an aryl group, an arylalkyl group, arylalkenyl group, an alkylaryl group, and R³¹ forming an aromatic ring or an aliphatic ring, is a hydrogen atom, a halogen atom, an alkyl group having 1 to 10 carbon atoms or a silicon-containing group.

R³² may be the same or different from each other, and are a hydrogen atom, a halogen atom, an alkyl group having 1 to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing group, a sulfur-containing group, a nitrogen-containing group or a phosphorus-containing group.

Also, at least two adjacent groups of the groups represented by R³² may form a single or a plurality of aromatic rings or aliphatic rings together with a carbon atom to which they are bonded. In this case, a ring formed by R³² has a total of 4 to 20 carbon atoms, including the carbon atom to which R³² is bonded. And R³², except for R³² forming an aromatic ring or an aliphatic ring, is a hydrogen atom, a halogen atom, an alkyl group having 1 to 10 carbon atoms or a silicon-containing group.

Moreover, among groups composed by two groups represented by R³², wherein the two groups form a single or a plurality of aromatic rings or aliphatic rings, an embodiment in which a fluorenyl group may become a structure of the following formula is included.

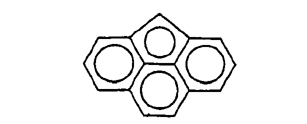

R³² is preferably a hydrogen atom or an alkyl group, and especially preferable is a hydrogen atom or a hydrocarbon group having 1 to 3 carbon atoms of methyl, ethyl and propyl. A fluorenyl group having R³² as such a substituent is suitably exemplified by 2,7-dialkyl-fluorenyl group. As an alkyl group of 2,7-dialkyl of this case, an alkyl group having 1 to 5 carbon atoms is exemplified. Also, R³¹ and R³² may be the same or different from each other.

R³³ and R³⁴ may be the same or different from each other, and are as before a hydrogen atom, a halogen atom, an alkyl group having 1 to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing group, a sulfur-containing group, a nitrogen-containing group or a phosphorus-containing group. Among these groups, at least one of R³³ and R³⁴ is preferably an alkyl group having 1 to 3 carbon atoms.

X¹ and X² may be the same or different from each other, and are a hydrogen atom, a halogen atom, a hydrocarbon group having 1 to 20 carbon atoms, a halogenated hydrocarbon group having 1 to 20 carbon atoms, an oxygen-containing group, a sulfur-containing group or a nitrogen-containing group, or a conjugated diene residue formed by X¹ and X².

The conjugated diene residue formed by X¹ and X² is preferably a 1,3-butadiene, 2,4-hexadiene, 1-phenyl-1,3-pentadiene and 1,4-diphenylbutadiene residue, and these residues are optionally further substituted by a hydrocarbon group having 1 to 10 carbon atoms.

X¹ and X² are preferably a halogen atom, a hydrocarbon group having 1 to 20 carbon atoms or a sulfur-containing group.

Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, -SO₂-, -NR³⁵-, -P(R³⁵) -, -P(O) (R³⁵)-, -BR³⁵- or -AlR³⁵- (provided that R³⁵ is a hydrogen atom, a halogen atom, a hydrocarbon group having 1 to 20 carbon atoms or a halogenated hydrocarbon group having 1 to 20 carbon atoms).

Of these divalent groups, a group in which the shortest bonding moiety of -Y- is composed of one or two atoms is preferable. Also, R³⁵ is a halogen atom, a hydrocarbon group having 1 to 20 carbon atoms or a halogenated hydrocarbon group having 1 to 20 carbon atoms.

Y is preferably a divalent hydrocarbon group having 1 to 5 carbon atoms, a divalent silicon-containing group or a divalent germanium-containing group, more preferably a divalent silicon-containing group, especially preferably alkylsilylene, alkylarylsilylene or arylsilylene.

### (Example-8 of the metallocene compound)

Moreover, a metallocene compound represented by the following general formula (10) may also be used as the metallocene compound.

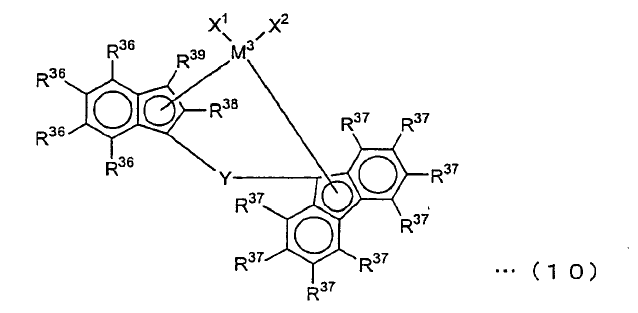

In the formula, M³ is a transition metal atom of Group IV elements in the periodic table, specifically titanium, zirconium or hafnium, preferably zirconium.

R³⁶ may be the same or different from each other, and is a hydrogen atom, a halogen atom, an alkyl group having 1 to 10 carbon atoms, an aryl group having 6 to 10 carbon atoms, an alkenyl group having 2 to 10 carbon atoms, a silicon-containing group, an oxygen-containing group, a sulfur-containing group, a nitrogen-containing group or a phosphorus-containing group. In addition, the above alkyl group and alkenyl group may be substituted with a halogen atom.

Among these, R³⁶ is preferably an alkyl group, an aryl group or a hydrogen atom, and especially preferably a hydrocarbon group having 1 to 3 carbon atoms of methyl, ethyl, n-propyl or i-propyl, an aryl group such as phenyl, α,-naphthyl, β-naphthyl and the like or a hydrogen atom.

R³⁷ may be the same or different from each other, and are a hydrogen atom, a halogen atom, an alkyl group having 1-to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing group, a nitrogen-containing group or a phosphorus-containing group. Furthermore, the above alkyl group, aryl group, alkenyl group, arylalkyl group, arylalkenyl group or alkylaryl group is optionally substituted with a halogen.

Among these, R³⁷ is preferably a hydrogen atom or an alkyl group, and especially preferably a hydrogen atom or a hydrocarbon group having 1 to 4 carbon atoms of methyl, ethyl, n-propyl, i-propyl, n-butyl and tert-butyl. In addition, the above R³⁶ and R³⁷ may be the same or different from each other.

One of R³⁸ and R³⁹ is an alkyl group having 1 to 5 carbon atoms, and other is a hydrogen atom, a halogen atom, an alkyl group having 1 to 10 carbon atoms, an alkenyl group having 2 to 10 carbon atoms, a silicon-containing group, an oxygen-containing group, a sulfur-containing group, a nitrogen-containing group or a phosphorus-containing group.

Of these groups, one of R³⁸ and R³⁹ is preferably an alkyl group having 1 to 3 carbon atoms such as methyl, ethyl, propyl and the like, and the other is preferably a hydrogen atom.

X¹ and X² may be the same or different from each other, and are a hydrogen atom, a halogen atom, a hydrocarbon group having 1 to 20 carbon atoms, a halogenated hydrocarbon group having 1 to 20 carbon atoms, an oxygen-containing group, a sulfur-containing group or a nitrogen-containing group or a conjugated diene residue formed by X¹ and X². Of these groups, a halogen atom or a hydrocarbon group having 1 to 20 carbon atoms is preferable.

Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, -SO₂-, -NR⁴⁰-, -P(R⁴⁰)-, -P(O) (R⁴⁰) -, -BR⁴⁰- or -AlR⁴⁰- (provided that R⁴⁰ is a hydrogen atom, a halogen atom, a hydrocarbon group having 1 to 20 carbon atoms, or a halogenated hydrocarbon group having 1 to 20 carbon atoms).

Of these divalent groups, Y is preferably a divalent hydrocarbon group having 1 to 5 carbon atoms, a divalent silicon-containing group or a divalent germanium-containing group, more preferably a divalent silicon-containing group, and especially preferably alkylsilylene, alkylarylsilylene or arylsilylene.

The metallocene compounds explained above are used alone or in a combination of two or more kinds. Moreover, the metallocene compounds may be diluted in a hydrocarbon or a halogenated hydrocarbon.

### (An organic aluminoxy compound)

An organic aluminoxy compound may be a known aluminoxane or a benzene-insoluble organic aluminoxy compound. Such a known aluminoxane is represented specifically by the following formulas.

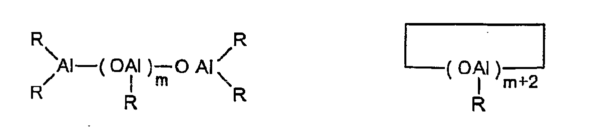

Here, R is a hydrocarbon group such as a methyl group, an ethyl group, a propyl group and a butyl group, preferably a methyl group or an ethyl group, especially preferably a methyl group, and m is 2 or larger, preferably an integer from 5 to 40.

An aluminoxane may be composed of a mixed alkyloxyaluminum unit consisting of an alkyloxyaluminum unit represented by the formula (OA1 (R')) and an alkyloxyaluminum unit represented by the formula (OA1 (R")) (wherein, R' and R" may be exemplified by a similar hydrocarbon group to that of R, and R' and R" represent a distinct group). Moreover, an organic aluminoxy compound may contain a small amount of an organometallic compound component other than that of aluminum.

### (An ionized ionic compound)

An ionized ionic compound (which may sometimes be called "ionic ionized compound" or "ionic compound") may be exemplified by a Lewis acid, an ionic compound, a borane compound and a carborane compound.

As a Lewis acid, there may be exemplified a compound represented by BR₃ (R is a phenyl group which may have a substituent such as a fluorine, a methyl group and a trifluoromethyl group, or fluorine). Specific examples of a Lewis acid include trifluoroboron, triphenylboron, tris(4-fluorophenyl)boron, tris(3,5-difluorophenyl) boron, tris(4-fluoromethylphenyl)boron,' tris(pentafluorophenyl)boron, tris(p-tolyl)boron, tris(o-tolyl)boron, tris(3,5-dimethylphenyl)boron and the like.

Examples of the above ionic compounds include a trialkyl-substituted ammonium salt, an N,N-dialkylanilinium salt, a dialkylammonium salt, a triarylsulfonium salt and the like. Examples of a trialkyl-substituted ammonium salt as the ionic compound include triethylammoniumtetra(phenyl)boron, tripropylammoniumtetra(phenyl)boron, tri(n-butyl)ammoniumtetra(phenyl)boron and the like. Examples of a dialkylammonium salt as the ionic compound include di(1-propyl)ammoniumtetra(pentafluorophenyl)boron, dicyclohexylammoniumtetra(phenyl)boron and the like.

Also, example of the ionic compounds include triphenylcarbeniumtetrakis(pentafluorophenyl)borate, N,N-dimethylaniliniumtetrakis(pentafluorophenyl)borate, ferroceniumtetra(pentafluorophenyl)borate and the like.

Examples of the borane compound include decaborane (9); bis[tri(n-butyl)ammonium]nonaborate, bis[tri(n-butyl)ammonium]decaborate, a salt of a metallic borane anion such as bis[tri(n-butyl)ammonium]bis(dodecahydridedodecaborate)nickelate (III) and the like, and the like.

Examples of the carborane compound include 4-carbanonaborane (9), 1,3-dicarbanonaborane (8), a salt of a metallic carborane anion such as bis[tri(n-butyl)ammonium]bis(undecahydride-7-carbaundecaborate)nickelate (IV).

These ionized ionic compounds may be used alone or in a combination of two or more kinds. Also, the organic aluminoxy compounds and ionized ionic compounds may be used by supporting on a supporting compound.

Furthermore, in forming a metallocene-based catalyst, an organoaluminum compound described below may be used together with an organic aluminoxy compound and/or an ionized ionic compound.

### (An organoaluminum compound)

As an organoaluminum compound which is used when needed, a compound which has at least one Al-carbon bond in the molecule may be used. These compounds may be exemplified by an organoaluminum compound represented, for example, by the following general formula (11),

(R⁶)ₘAl (OR⁷)ₙH_{P}X⁴_{q} (11)

(wherein, R⁶ and R⁷ may be the same or different from each other, and are a hydrocarbon group containing typically 1 to 15 carbon atoms, preferably 1 to 4 carbon atoms, X⁴ is a halogen atom, m, n, p and q are each integer satisfying the conditions: 0 < m ≤ 3, 0 ≤ n <3, 0 ≤ p < 3, and 0 ≤ q < 3, and in addition m + n + p + q = 3), and an alkylated complex compound composed of a Group 1 metal and aluminum, represented by the following general formula (12):

(M⁵) Al (R⁶) (12)

(wherein, M⁵ is Li, Na or K, and R⁶ is the same as R⁶ in the above general formula (11)).

### (Polymerization)

A polyolefin wax for use in the present invention can be obtained by polymerizing ethylene solely generally in a liquid phase or co-polymerizing ethylene and α-olefins in the presence of the metallocene-based catalyst described above. In this case, a hydrocarbon solvent is generally used, but an α-olefin itself can be also used as a solvent. In addition, each monomer used here is as described above.

Available polymerization methods include suspension polymerization where polymerization is carried out in a state where a polyolefin wax is suspended in the form of particles in a solvent such as hexane, gas phase polymerization where no solvent is used, and solution polymerization where polymerization is carried out at a polymerization temperature of 140°C or higher in a state where the polyolefin wax is melted singly or together with a solvent. Among these methods, solution polymerization is preferable because it satisfies both aspects of economic efficiency and product quality.

Polymerization reaction may be carried out by either a batch process or a continuous process. When the polymerization reaction is carried out in a batch process, the catalyst components described above are used under the conditions of concentration described below.

The concentration of a metallocene compound is generally 0.00005 to 0.1 mmol/L (polymerization volume), preferably 0.0001 to 0.05 mmol/L.

The organic aluminoxy compound is supplied in a mole ratio of aluminum atom with respect to the transition metal of the metallocene compound contained in the polymerization system (Al/transition metal) at 1 to 10000, preferably 10 to 5000.

The ionized ionic compound is supplied in a mole ratio of the ionized ionic compound with respect to the metallocene compound contained in the polymerization system (ionized ionic compound/metallocene compound) at 0.5 to 20, preferably 1 to 10.

Further, when the organoaluminum compound is used, generally, it is used in an amount of about 0 to 5 mmol/L (polymerization volume), preferably about 0 to 2 mmol/L.

The polymerization reaction is conducted under the conditions including the polymerization temperature in the range of usually -20 to +200°C, preferably 50 to 180°C, more preferably 70 to 180°C, and the polymerization pressure in the rang of above 0 to equal to or lower than 7.8 MPa (80 kgf/cm², gauge pressure), preferably above 0 to equal to or lower than 4.9 MPa (50 kgf/cm², gauge pressure).

In the polymerization, ethylene and an α-olefin that is used when needed are supplied to the polymerization system in such an amount and a ratio at which the polyolefin wax having a specific composition described above is obtained. Further, in the polymerization, a molecular weight adjusting agent such as hydrogen can be added.

When the polymerization is carried out as described above, the produced polymer is obtained usually in the form of a polymerization liquid that contains the polymer, so that the polymerization liquid is further processed in the usual manner to obtain the polyolefin wax.

As a catalyst used in the polymerization, particularly a catalyst containing the metallocene compound described in (Example-6 of metallocene compound) is preferably used.

The polyolefin wax may be used singly or in a combination with a plurality of polyolefin waxes as an additive for communication cable filler of the present invention.

Further, the additive for communication cable filler of the present invention can contain a gelling agent such as hydroxystearate, acrylic acid, methacrylic acid, a polymer of acrylic acid and/or methacrylic acid derivatives, or a polyolefin-based elastomer containing ethylene, propylene or butene as a main component (low crystallinity polymer and the like) .

The gelling agent is used in an amount of generally 0.1 to 50 parts by mass, preferably 1 to 10 parts by mass, with respect to 100 parts by mass of the polyolefin wax.

Other publicly known additives including antioxidant, flame retardant, weathering stabilizer and the like can be used when needed.

Further, the above-mentioned gelling agent, antioxidant, flame retardant, and weathering stabilizer can be admixed in an arbitrary way, and methods or techniques publicly known are applicable.

The communication cable filler of the present invention (hereinafter called as "cable jelly") contains as an essential component a jelly-like filler made of polybutene and the like and an additive for communication cable filler that contains a polyolefin wax having specific properties described above.

In the communication cable filler according to the present invention, the concentration of the additive for communication cable filler is 1% by mass to 20% by mass, preferably 1% by mass to 15% by mass, more preferably 5% by mass to 10% by mass, based on the total amount of the cable jelly.

When the amount of the additive admixed in the communication cable filler is less than 1% by mass, the solidifying temperature of the cable jelly does not become sufficiently low. On the other hand, when the amount exceeds 20% by mass, the resultant cable jelly becomes brittle after solidifying and is easy to develop flaws or cracks.

Polybutene, the main component of the communication cable filler of the present invention, has a number average molecular weight (Mn) of 200 to 2400, preferably 500 to 1500, and commercially available polybutene can be used. Further, hydrogenated polybutene can be also used, which is prepared by known methods of hydrogenation using nickel and the like.

When the number average molecular weight (Mn) of the polybutene is less than 200, the consistency of the cable jelly becomes large, making it too soft, and when the number average molecular weight (Mn) exceeds 2400, the melt viscosity of the cable jelly becomes large, resulting in poor workability and not preferable.

In the communication cable filler according to the present invention, the amount of polybutene admixed is 80% by mass to 99% by mass, preferably 85% by mass to 99% by mass, more preferably 90% by mass to 95% by mass on the basis of the total amount of the cable jelly.

Further, to the communication cable filler of the present invention, oil can be admixed to such an extent that the strength of the cable jelly is not impaired, however, it is preferred that oil is not admixed. Synthetic oil or natural oil can be used for the oil admixed; for example, mineral oil, fuel oil, industrial raw oil, waste oil, edible oil and the like can be cited. More specifically, cited are a liquid hydrocarbon such as kerosene, light oil, crude oil, heavy oil, lubricating oil, liquid paraffin and the like, a non-crystalline polymer fluid such as polybutene oligomer and the like, or an animal or vegetable oil and the like such as olive oil used for edible oil and the like.

The amount of oil admixed is usually 0% by mass to 50% by mass on the basis of the total amount of the cable jelly.

In addition, the total amount of the above-mentioned additive for communication cable filler and polybutene is 100% by mass, and when other arbitrary components are contained in the communication cable filler, the total amount becomes less than 100% by mass.

Although the essential components of the communication cable filler of the present invention are the additive for communication cable filler and polybutene, the other components publicly known in the field of cable jelly, for example, atactic polypropylene, styrene-based elastomer, or polyolefin-based elastomer, can be admixed, when needed, as long as the performance properties of the communication cable filler of the invention is not impaired.

These arbitrary components are admixed in an amount of 0.1% by mass to 80% by mass, preferably 10% by mass to 20% by mass, on the basis of the total amount of the cable jelly.

### EXAMPLES

The present invention will be further described in detail with reference to the following examples, but it should be construed that the invention is in no way limited to those examples. In the examples, "parts by mass" means "% by mass" unless otherwise noted.

The molecular weight and molecular weight distribution of the polyolefin wax in the present invention were measured by GPC. The measurement was carried out by using a commercial mono-dispersed polystyrene as a standard sample, under the following conditions:
- Apparatus:: WATERS CORPORATION (150C-ALC/GPC)
- Solvent:: o-dichlorobenzene
- Column:: TOSOH CORP. (CM-Type)
- Flow rate:: 1.0 ml/min
- Sample:: 0.10% o-dichlorobenzene solution
- Temperature:: 140°C

The melting point in the present invention was measured with DSC-20 (Seiko Instruments Inc.) in accordance with the method of differential scanning calorimetry (DSC). The temperature of a sample of about 10 mg was increased from - 20°C to 200°C at a rate of 10°C/min, and the melting point was obtained from the endothermic peak of the resultant curve. Prior to this heat elevation measurement, it is preferred that the thermal history of each sample resin is unified by increasing the temperature of the sample resin once to 200°C, keeping it at the same temperature for 5 min, then immediately cooling to normal temperature (25°C). The measurement was performed in a conventional manner at a temperature rise rate of 10°C/min.

The density in the present invention (D, kg/m³) was measured in accordance with JIS K7112-1980, using a sample that was heated at 150 °C for 1 hr, left in a thermostatic oven at 23°C for 3 hrs or more.

The storage modulus (G') and loss modulus (G") in the present invention were measured under the following conditions:
- Apparatus:: STRESSTECH (REOLOGICA Instruments AB) parallel plates having a diameter of 20 mm
- Measuring Frequency:: 1 Hz
- Strain rate:: automatic, temperature dependence
- Measured Temperature:: 30°C to 150°C
- Temperature rise rate:: 2°C/min
- GAP:: 0.5 mm

Further the cable jelly was evaluated using the following method.

### [1] Dropping point

The dropping point was measured in accordance with ASTM D 566.
O: 107°C ≥ dropping point ≥ 94°C
X: 94°C > dropping point, dropping point > 107°C

### (Preparation of polyolefin wax 1 (Wax 1))

In a 2 L stainless steel autoclave thoroughly purged with nitrogen, 950 ml of hexane was placed, and hydrogen was fed until the pressure in the system reached 0.3 MPa (gauge pressure). After the temperature in the system was raised to 150°C, 0.3 mmol of triisobutylaluminum, 0.04 mmol of triphenylcarbeniumtetrakis(pentafluorophenyl)borate and 0.002 mmol of (t-butyramide)dimethyl(tetramethyl-η⁵⁻cyclopentadienyl)silanetitaniumdichloride (available from Sigma-Aldrich Co.) were pressure-injected into the autoclave with ethylene to initiate polymerization. Thereafter, only ethylene was continuously fed to maintain the total pressure at 2.9 MPa (gauge pressure), and polymerization was conducted at 150°C for 20 minutes.

After a small amount of ethanol was added to the system to terminate the polymerization, the unreacted ethylene was purged off. The obtained polymer solution was dried overnight at 100°C under reduced pressure. The properties of the resultant polyolefin wax1 (Wax1) were evaluated and the following values were obtained:
Molecular weight (GPC):Mn = 520,
Mw = 980, Mw/Mn = 1.88
Density: 952 kg/m³
Melting point (DSC): 119°C

The above-described reaction was repeated until an amount needed was obtained.

### (Preparation of polyolefin wax 2 (Wax 2))

Polymerization was carried out in the same manner as in Preparation of polyolefin wax 1 (Wax 1), except that hydrogen was fed until the pressure in the system reached 0.35 MPa (gauge pressure).
Molecular weight (GPC):Mn = 380,
Mw = 700, Mw/Mn = 1.84
Density: 945 kg/m³
Melting point (DSC): 117°C

### (Preparation of polyolefin wax 3 (Wax 3))

Polymerization was carried out in the same manner as in Preparation of polyolefin wax 1 (Wax 1), except that 940 ml of hexane and 10 ml of 1-butene as an α-olefin component were used.
Molecular weight (GPC):Mn = 570,
Mw = 1070, Mw/Mn = 1.88
Density: 940 kg/m³
Melting point (DSC): 117°C

**Table 1: List of properties of polyolefin waxes**

| | Mn | Mw | Density (kg/m²) | DSC melting point (°C) |
|---|---|---|---|---|
| Wax 1 | 520 | 980 | 952 | 119 |
| Wax 2 | 380 | 700 | 945 | 117 |
| Wax 3 | 570 | 1070 | 940 | 117 |
| 100P | 570 | 1100 | 950 | 116 |
| 110P | 630 | 1220 | 920 | 109 |
| 200P | 1070 | 2720 | 970 | 122 |

### Example 1

In a 100 ml glass beaker, 98 parts by mass of Nisseki Polybutene HV-300 (available from NIPPON OIL CORP.) and 2 parts by mass of the polyolefin wax 1 (Wax 1) were weighed and sufficiently blended at about 160°C in an oil bath. For blending, a stirrer with small-size three turbine blades was used at a rotation speed of 100 revolutions/min for 30 min. The dropping point, storage modulus (G'), and loss modulus (G") of the resultant communication cable filler were evaluated.

### Example 2

A communication cable filler was prepared in the same manner as in Example 1, except that the polyolefin wax 2 (Wax 2) was used in place of the polyolefin wax 1 (Wax 1).

### Example 3

A communication cable filler was prepared in the same manner as in Example 1, except that the polyolefin wax 3 (Wax 3) was used in place of the polyolefin wax 1 (Wax 1).

### Comparative Example 1

A communication cable filler was prepared in the same manner as in Example 1, except that Hi-wax 100P (Mitsui Chemicals Inc., produced with a Ziegler catalyst) was used in place of the polyolefin wax 1 (Wax 1).

### Comparative Example 2

A communication cable filler was prepared in the same manner as in Comparative Example 1, except that Hi-wax 110P (Mitsui Chemical Inc., produced with a Ziegler catalyst) was used in place of Hi-wax 100P.

### Comparative Example 3

A communication cable filler was prepared in the same manner as in Comparative Example 1, except that Hi-wax 200P (Mitsui Chemical Inc., produced with a Ziegler catalyst) was used in place of Hi-wax 100P.

**Table 2: List of properties of cable jelly**

| | Ex.1 | Ex.2 | Ex.3 | Comp. Ex.1 | Comp.Ex.2 | Comp.Ex.3 |
|---|---|---|---|---|---|---|
| G' (80°C ) (Pa) | 1.5 × 10³ | 1.3 × 10³ | 1.2 × 10³ | 8.1 × 10¹ | 2.0 × 10¹ | 3.0 × 10³ |
| G'' (120°C) (Pa) | 2.3 | 1.5 | 1.0 | 1.7 | 0.9 | 3.0 × 10¹ |
| Dropping Point (°C) | o | o | o | o | X | X |

### INDUSTRIAL APPLICABILITY

As mentioned above, according to the present invention, an additive for communication cable filler and a communication cable filler which satisfy both filling workability and strength of a cable jelly can be provided.

## Claims

1. An additive for communication cable filler, comprising as its main component a polyolefin wax specified by:
(i) being an ethylene homopolymer or an ethylene/C₃-C₁₀ α-olefin copolymer;
(ii) having a number average molecular weight (Mn), measured by gel permeation chromatography (GPC), of 400 to 5,000; and
(iii) upon the addition of the additive for communication cable filler to a jellylike filling material so as to form a communication cable filler, exhibiting a storage modulus (G') of communication cable filler at 80°C ranging from 1 × 10³ Pa to 1 × 10⁴ Pa and a loss modulus (G") at 120°C of 1 × 10¹ Pa or below.

2. The additive for communication cable filler according to claim 1, wherein the polyolefin wax is a polyolefin wax produced with a metallocene-based catalyst.

3. The additive for communication cable filler according to claim 1, wherein the polyolefin wax is an ethylene homopolymer.

4. A communication cable filler comprising at least the additive for communication cable filler according to claim 1 and a jellylike filling material.

5. The communication cable filler according to claim 4, wherein the jellylike filling material is polybutene.

6. The communication cable filler according to claim 4, wherein the communication cable filler contains no oil.

7. The communication cable filler according to claim 4, wherein the communication cable filler contains the additive for communication cable filler in an amount ranging from 1 to 20% by mass.
